# FASCICULE DE BREVET EUROPEEN

(11) **EP 1 700 016 B1**
(45) Date de publication et mention de la délivrance du brevet: **13.11.2013**
(21) Numéro de dépôt: 04805575.0
(22) Date de dépôt: 26.11.2004
(51) Int. Cl.: F02B 25/14, F02B 29/08, F02B 17/00

(54) **PROCEDE DE CONTROLE D'UN MOTEUR SURALIMENTE, NOTAMMENT D'UN MOTEUR A INJECTION INDIRECTE**
VERFAHREN ZUR STEUERUNG EINES AUFGELADENEN MOTORS, INSBESONDERE EINES MOTORS MIT INDIREKTER EINSPRITZUNG
METHOD OF CONTROLLING A SUPERCHARGED ENGINE, PARTICULARLY AN INDIRECT INJECTION ENGINE

(30) Priorité: 02.12.2003 FR 0314212
(43) Date de publication de la demande: 13.09.2006
(73) Titulaire: Institut Français du Pétrole, 92852 Rueil Malmaison Cedex (FR)
(72) Inventeur: LEDUC, Pierre, F-78650 Beynes (FR); MONNIER, Gaëtan, F-92500 Rueil Malmaison (FR)
(86) Numéro de dépôt international: PCT/FR2004/003049
(87) Numéro de publication internationale: WO 2005/056992

(56) Documents cités:
- US-A- 4 217 866
- US-A- 4 484 556
- US-A- 4 809 649
- PATENT ABSTRACTS OF JAPAN vol. 0031, no. 37 (M-080), 14 novembre 1979 (1979-11-14) & JP 54 114637 A (DAIHATSU MOTOR CO LTD), 6 septembre 1979 (1979-09-06)

## Description

La présente invention se rapporte à un procédé de contrôle d'un moteur à combustion interne suralimenté, notamment à injection indirecte, et à un moteur utilisant un tel procédé.

Généralement, la puissance délivrée par un moteur à combustion interne est fonction de la quantité d'air introduite dans la chambre de combustion de ce moteur, quantité d'air qui est elle-même proportionnelle à la densité de cet air. Comme cela est connu, cet air peut être comprimé par tous moyens de compression, tel qu'un turbocompresseur, avant son admission dans le cylindre du moteur de manière à obtenir une suralimentation en air de ce cylindre.

Dans le but d'améliorer encore plus ce remplissage en air, il est prévu d'évacuer les gaz brûlés résiduels de la chambre de combustion, avant la fin de la phase d'échappement du moteur, pour les remplacer par de l'air suralimenté, étape qui est plus communément appelée balayage des gaz brûlés.

Comme cela est mieux décrit dans les brevets US 4 217 866 et US 4 809 649, ce balayage est réalisé en effectuant, en fin de phase d'échappement, une phase de croisement entre les soupapes d'échappement et d'admission d'un cylindre. Plus précisément, ce croisement est réalisé en ouvrant simultanément, pendant quelques degrés à quelques dizaines de degrés d'angle de rotation de vilebrequin, les soupapes d'échappement et d'admission et cela à proximité du point mort haut (PMH). Pour cela, il est prévu un moyen d'admission spécifique, constitué d'une tubulure et d'une soupape, pour de l'air suralimenté non carburé en complément d'un moyen d'admission conventionnel, également constitué d'une tubulure et d'une soupape, prévu pour admettre de l'air suralimenté carburé dans la chambre de combustion. Ce balayage des gaz brûlés est donc réalisé en effectuant un croisement des soupapes d'échappement et de la soupape d'admission d'air suralimenté non carburé. Pendant ce croisement, les soupapes d'échappement restent ouvertes et de l'air suralimenté non carburé est admis dans la chambre de combustion. Cet air suralimenté non carburé, qui est à une pression supérieure à celle des gaz brûlés, balaye ces gaz pour les évacuer au travers des ou de la soupape d'échappement et occuper ainsi le volume libéré par ces gaz. A la fin du balayage, les soupapes d'échappement se ferment et de l'air suralimenté carburé est admis dans la chambre de combustion par l'autre moyen d'admission qui est muni d'un injecteur de carburant dans le cas d'une injection de carburant multipoints.

Ce type de moteur bien que donnant satisfaction présente néanmoins des inconvénients non négligeables.

En effet, dans certains modes de fonctionnement d'un moteur multicylindres, à haut régime et pleine charge notamment, il se produit un phénomène de contrebalayage dans le cylindre qui empêche l'évacuation des gaz brûlés résiduels. Ce contrebalayage est généralement dû à la remontée d'une bouffée de gaz d'échappement d'un cylindre en début de phase d'échappement vers le cylindre qui est en phase terminale d'échappement et dans lequel se produit le balayage. Dans ce cas, lors du balayage, la soupape d'admission d'air suralimenté non carburé est ouverte, et comme la pression de la bouffée de gaz d'échappement est supérieure à la pression d'air de suralimentation, il se produit un blocage de l'entrée d'air d'admission et un passage des gaz d'échappement résiduels dans la tubulure d'admission d'air non carburé. Ces gaz contenus dans la tubulure sont ensuite réadmis dans la chambre de combustion lors de la phase d'admission du moteur.

Ceci a pour inconvénient de modifier, de manière incontrôlée, le taux des gaz résiduels contenus dans la chambre de combustion et de perturber la combustion qui se produit ensuite.

Pour remédier à ce qui précède, il est prévu que les moyens de commande en déplacement des soupapes d'admission, comme un arbre à cames, soient tels que la soupape du moyen d'admission d'air non carburé puisse rester constamment fermée jusqu'à la fin de la phase d'échappement du moteur afin de supprimer la phase de croisement entre la soupape d'air suralimenté non carburé et la soupape d'échappement. Pour ce faire, cet arbre à cames comporte un déphaseur permettant à la soupape d'admission d'air non carburé de s'ouvrir qu'à la fermeture des soupapes d'échappement.

Un tel déphaseur est d'une élaboration compliquée, nécessite un réglage précis et entraîne un surcoût du moyen de commande des soupapes d'admission.

La présente invention se propose de remédier aux inconvénients mentionnés ci-dessus.

Ainsi, la présente invention concerne un procédé de contrôle d'un moteur suralimenté, notamment d'un moteur à injection indirecte, comprenant au moins un cylindre comportant une chambre de combustion, au moins un moyen d'admission d'air suralimenté carburé avec une soupape d'admission d'air suralimenté carburé, un moyen d'admission d'air suralimenté non carburé avec une soupape d'admission d'air suralimenté non carburé et au moins un moyen d'échappement de gaz brûlés avec une soupape d'échappement, caractérisé en ce qu'il consiste :
- à réaliser, avant la fin de la phase d'échappement d'un cylindre du moteur et au voisinage du point mort haut, un croisement des soupapes par ouverture de la soupape d'admission d'air suralimenté non carburé et par ouverture de la soupape d'échappement,
- à commander un moyen d'obturation additionnelle du moyen d'admission d'air suralimenté non carburé de manière à admettre cet air suralimenté dans la chambre pour réaliser un balayage des gaz brûlés résiduels, lorsque la pression d'air suralimenté non carburé est supérieure à la pression des gaz d'échappement,
- à commander ledit moyen d'obturation additionnelle de manière à fermer ledit moyen d'admission d'air suralimenté non carburé lorsque la pression d'air suralimenté non carburé est inférieure à la pression des gaz d'échappement.

Ce procédé peut consister à maintenir la soupape d'admission d'air non carburé en position ouverte au moins pendant toute l'opération de balayage.

Il peut consister à fermer la soupape d'admission d'air non carburé à la fin de la phase d'admission du moteur.

Avantageusement, il peut consister à ouvrir la soupape d'admission d'air suralimenté carburé à la fermeture des soupapes d'échappement.

De manière préférentielle, il peut consister à maintenir le moyen d'obturation additionnelle en position d'ouverture tant que la pression d'air suralimenté non carburé est supérieure à la pression des gaz d'échappement.

Il peut aussi consister à maintenir le moyen d'obturation additionnelle en position de fermeture tant que la pression d'air suralimenté non carburé est inférieure à la pression des gaz d'échappement.

L'invention concerne également un moteur à combustion interne suralimenté, notamment moteur à injection indirecte, comprenant au moins un cylindre comportant une chambre de combustion, un moyen d'admission d'air suralimenté carburé avec un moyen d'obturation, un moyen d'admission d'air suralimenté non carburé avec un moyen d'obturation et au moins un moyen d'échappement de gaz brûlés, caractérisé en ce qu'il comprend un moyen d'obturation additionnelle du moyen d'admission d'air suralimenté non carburé à deux positions, une position de pleine ouverture ou une position de pleine fermeture dudit moyen d'admission d'air suralimenté non carburé.

Le moyen d'obturation additionnelle peut comprendre un volet articulé ou un boisseau.

Le moyen d'obturation additionnelle peut être contrôlé par des moyens de commande.

Les moyens de commandes peuvent comprendre des moyens d'évaluation des pressions à l'admission et à l'échappement du moteur.

Le moyen d'obturation peut être commandé par un arbre à cames dépourvu de déphaseur.

Les autres caractéristiques et avantages de l'invention apparaîtront mieux à la lecture de la description qui va suivre, donnée à titre uniquement illustratif et nullement limitatif, en se référant aux dessins annéxés sur lesquelles :
- La figure 1 est une vue schématique d'un moteur selon l'invention et
- La figure 2 est un graphique montrant les courbes des lois de levée (L) des soupapes et indique la position (P) d'un moyen d'obturation additionnelle en fonction de la position du piston du moteur selon l'invention.

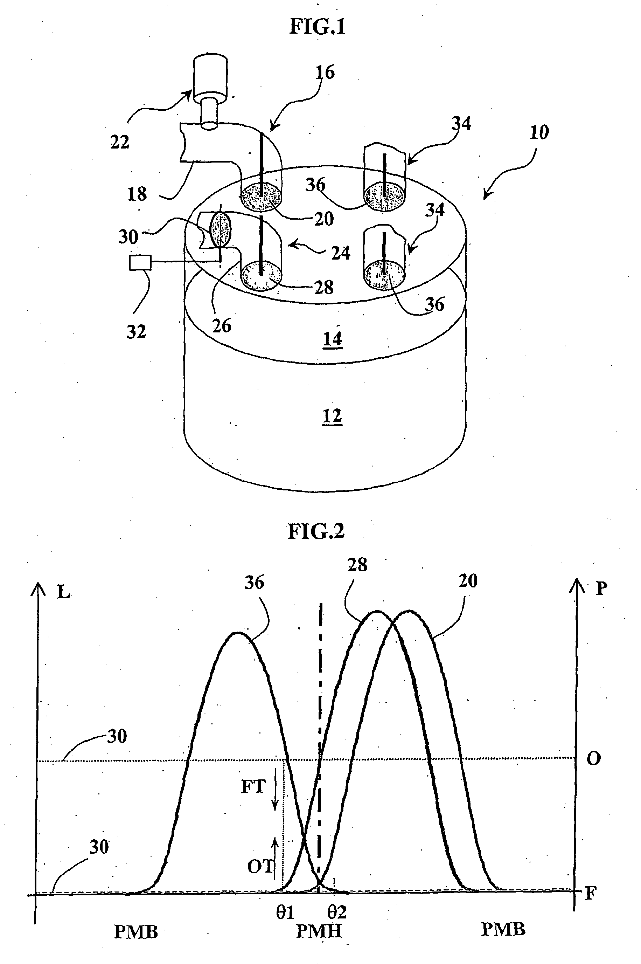

La figure 1 montre un moteur à combustion interne suralimenté, notamment de type à injection indirecte d'essence et en particulier à allumage commandé, comprenant au moins un cylindre 10 dans lequel coulisse un piston 12 qui délimite avec la partie haute du cylindre une chambre de combustion 14 dans laquelle se produit la combustion d'un mélange d'air suralimenté et de carburant.

Le cylindre 10 comprend un moyen d'admission d'air suralimenté carburé 16, conventionnellement formé par un orifice prévu dans la culasse que comporte généralement ce moteur, une tubulure 18 en communication avec cet orifice et un moyen d'obturation 20 dudit passage, tel qu'une soupape d'admission d'air suralimenté carburé. Un moyen d'injection de carburant 22 permet d'introduire un carburant dans la tubulure 18 de façon à ce qu'il se mélange avec l'air suralimenté qui y circule. Ce cylindre comprend également un moyen d'admission d'air suralimenté non carburé 24 constitué d'un orifice disposé dans la culasse, une tubulure 26 en communication avec cet orifice et un moyen d'obturation 28 dudit passage, comme une soupape d'admission d'air suralimenté non carburé. La tubulure porte un moyen d'obturation additionnelle 30 permettant d'autoriser ou d'interdire la circulation de l'air suralimenté non carburé dans cette tubulure. De manière avantageuse, ce moyen d'obturation est un volet articulé autour d'un axe, mais tous autres moyens comme un robinet à boisseau peuvent être envisagés. De manière connue en soi, le moteur comprend aussi au moins un moyen d'échappement de gaz brûlés, ici deux moyens d'échappement 34, contrôlés par des moyens d'obturation, par exemple des soupapes d'échappement 36.

Le volet 30, qui est disposé en amont de la soupape 28, est commandé en rotation autour de son axe par tous moyens de commande 32, tels qu'un actionneur hydraulique, électrohydraulique ou électrique, comme un micromoteur. Ce moyen de commande reçoit des instructions venant d'une unité centrale (non représentée), telle que le calculateur-moteur que comporte habituellement un moteur. Ce calculateur comprend des cartographies ou des tables qui permettent d'évaluer, à tous moments, la pression dans les moyens d'admission 16, 24 et d'échappement 34 et cela notamment en fonction du régime et/ou de la charge de ce moteur. Ce calculateur peut également recevoir des signaux de capteurs de pression (non représentés) qui permettent de connaître la pression dans ces moyens d'admission et d'échappement.

Les soupapes 28 et 20 sont commandées en déplacement par un arbre à cames dépourvu de déphaseur mais comportant, de manière conventionnelle, des cames décalées pour la commande de la soupape d'admission d'air suralimenté non carburé 28 alors que les soupapes d'échappement 36 sont commandées par un autre arbre à cames conventionnel.

A bas et moyen régimes du moteur et à forte charge notamment, la pression de l'air d'admission suralimenté non carburé au niveau de la soupape 28 est supérieure à la pression des gaz d'échappement au niveau des soupapes d'échappement 36. Ce différentiel permet donc le balayage des gaz brûlés résiduels présents dans la chambre de combustion 14. Dans ce cas, pour effectuer ce balayage, les soupapes d'échappement 36 sont ouvertes et uniquement de l'air suralimenté non carburé est admis dans cette chambre de combustion, au voisinage du point mort haut (PMH). Cette admission se réalise, grâce au moyen d'admission 24, en ouvrant la soupape d'admission d'air non carburé 28 et en commandant l'actionneur 32 pour que le volet 30 soit commandé dans sa position de pleine ouverture pour libérer le passage de l'air suralimenté non carburé dans cette tubulure. Dans le cas où le volet 30 est déjà dans sa position de pleine ouverture, aucune action ne sera entreprise par l'actionneur 32 de manière à ce que ce volet reste dans sa position de pleine ouverture.

Sous l'effet du différentiel de pression entre la pression de l'air suralimenté et celle des gaz brûlés résiduels, ces derniers sont expulsés de la chambre 14 pour être évacués au travers des soupapes 36. Grâce à cela, le volume occupé par ces gaz brûlés est remplacé par de l'air suralimenté dépourvu de carburant.

Dès que le balayage des gaz brûlés est terminé, les soupapes d'échappement 36 sont fermées, la soupape d'admission 28 ainsi que le volet 30 sont maintenus en position ouverte. De l'air suralimenté carburé est ensuite introduit dans la chambre de combustion 14 par ouverture de la soupape 20 du moyen d'admission 16 et cela jusqu'à la fin de la phase d'admission du moteur.

Pour encore mieux détailler de telles configurations, on se rapporte maintenant à la figure 2 qui montre les lois de levés des soupapes d'échappement 36, de la soupape d'admission d'air suralimenté non carburé 28 et de la soupape d'admission d'air suralimenté carburé 20 ainsi que la position du volet 30 entre une position de fermeture (F) et d'ouverture (O) de la tubulure 26.

Avant la fin de la phase d'échappement du moteur et à un angle de vilebrequin θ1 au voisinage du point mort haut (PMH), les soupapes d'échappement 36 ne sont pas encore fermées et il est réalisé un balayage des gaz brûlés résiduels présents dans la chambre de combustion. Pour ce faire, la soupape d'admission 28 d'air non carburé s'ouvre et de l'air suralimenté non carburé est admis dans la chambre de combustion. A cet angle θ1, si le volet 30 est déjà en position ouverte (O), cette position est maintenue pendant le cycle du moteur et cela tant que la pression d'air suralimenté non carburé est supérieure à la pression des gaz d'échappement. A l'inverse, si le volet 30 est en position de fermeture (F) à l'angle θ1, ce volet est basculé en position de pleine ouverture (O) de la tubulure 26 (flèche OT) et est également maintenu dans cette position tant que la pression d'air suralimenté non carburé est supérieure à la pression des gaz d'échappement. Dans cette configuration, de l'air suralimenté non carburé est introduit dans la chambre de combustion à une pression supérieure à celle de la pression des gaz d'échappement résiduels et ces gaz d'échappement sont évacués au travers des moyens d'échappement pour y être remplacés par de l'air suralimenté non carburé. Ce balayage se produit jusqu'à la fermeture complète des soupapes d'échappement 36, à un angle de vilebrequin θ2 après le PMH et au voisinage de celui-ci.

Dès que ces soupapes d'échappement sont fermées, la soupape d'air suralimenté non carburé 28 est maintenue en position ouverte puis suit sa loi de levée jusqu'au voisinage du point mort bas (PMB), le volet 30 est maintenu en position ouverte, la soupape d'admission d'air suralimenté carburé 20 s'ouvre et de l'air suralimenté carburé est introduit dans la chambre de combustion 14 jusqu'à fermeture de cette soupape au voisinage du point mort bas (PMB).

A haut régime du moteur, une contre pression des gaz d'échappement, se réalise au niveau des soupapes d'échappement 36, ce qui produit un contre balayage dans la chambre de combustion. Ce contre balayage, qui se traduit par une pression des gaz d'échappement au niveau des soupapes d'échappement 36 qui est supérieure à la pression de l'air d'admission suralimenté non carburé au niveau de la soupape 28, interdit de pouvoir réaliser le balayage des gaz brûlés résiduels présents dans la chambre de combustion. Dans ce cas, comme la soupape d'admission d'air non carburé 28 est ouverte et pour éviter que des gaz d'échappement ne soient introduits dans la tubulure d'admission d'air suralimenté non carburé, le volet 30 ferme le passage d'air suralimenté non carburé dans la tubulure 26.

En se référant à la figure 2, à l'angle de vilebrequin θ1 au voisinage du point mort haut (PMH), les soupapes d'échappement 36 ne sont pas encore fermées et la soupape d'admission 28 d'air non carburé s'ouvre. Pour éviter le phénomène de contrebalayage, le volet 30 est commandé en position de fermeture de la tubulure 26 de manière à en interdire la circulation d'un quelconque fluide (air d'admission ou gaz d'échappement). A cet angle θ1, si le volet 30 est déjà en position fermée (F), ce dernier est conservé dans cette position pendant toute la période où la pression des gaz d'échappement est supérieure à la pression d'air suralimenté non carburé. Par contre, si le volet 30 est en position d'ouverture (0) à l'angle θ1, ce volet est basculé en position de pleine fermeture (F) de la tubulure 26 (flèche FT) et est également maintenu dans cette position. Dans cette configuration, de l'air suralimenté non carburé ne peut pas être admis dans la chambre 14 et les gaz d'échappement ne peuvent pas pénétrer dans la tubulure 26.

Comme dans le cas précédent, dès que les soupapes d'échappement sont fermées, la soupape d'air suralimenté non carburé 28 est maintenue en position ouverte puis suit sa loi de levée jusqu'au voisinage du point mort bas (PMB) et comme le volet 30 est en position de pleine fermeture de la tubulure 26, aucune circulation de fluide ne se produit dans cette tubulure. La soupape d'admission d'air suralimenté carburé 20 s'ouvre et de l'air suralimenté carburé est introduit dans la chambre de combustion 14 jusqu'à fermeture de cette soupape au voisinage du point mort bas (PMB).

Grâce à l'invention, le croisement des soupapes est donc permanent et les soupapes d'admission d'air suralimenté non carburé et d'admission d'air suralimenté carburé sont commandées de manière conventionnelle, sans déphaseur, par tous dispositifs simples habituellement utilisés dans le domaine tout en évitant un éventuel reflux de gaz d'échappement dans la tubulure d'air suralimenté non carburé grâce au volet 30.

La présente invention n'est pas limitée à l'exemple décrit mais englobe toutes variantes et tous équivalents.

## Revendications

1. Procédé de contrôle d'un moteur suralimenté, notamment d'un moteur à injection indirecte, comprenant au moins un cylindre (10) comportant une chambre de combustion (14), au moins un moyen d'admission d'air suralimenté carburé (16) avec une soupape d'admission d'air suralimenté carburé (20), un moyen d'admission d'air suralimenté non carburé (24) avec une soupape d'admission d'air suralimenté non carburé (28) et au moins un moyen d'échappement de gaz brûlés (34) avec une soupape d'échappement (36), **caractérisé en ce qu'**il consiste :
- à réaliser, avant la fin de la phase d'échappement d'un cylindre du moteur et au voisinage du point mort haut (PMH), un croisement des soupapes par ouverture de la soupape d'admission (28) et par ouverture de la soupape d'échappement (36),
- à commander un moyen d'obturation additionnelle (30) du moyen d'admission d'air suralimenté non carburé (24) de manière à admettre cet air suralimenté dans la chambre (14) pour réaliser un balayage des gaz brûlés résiduels, lorsque la pression d'air suralimenté non carburé est supérieure à la pression des gaz d'échappement,
- à commander ledit moyen d'obturation additionnelle de manière à fermer ledit moyen d'admission d'air suralimenté non carburé (24) lorsque la pression d'air suralimenté non carburé est inférieure à la pression des gaz d'échappement.

2. Procédé selon la revendication 1, **caractérisé en ce qu'**il consiste à maintenir la soupape d'admission d'air non carburé (28) en position ouverte au moins pendant toute l'opération de balayage.

3. Procédé selon la revendication 1 ou 2, **caractérisé en ce qu'**il consiste à fermer la soupape d'admission d'air non carburé (28) à la fin de la phase d'admission du moteur.

4. Procédé selon l'une quelconque des revendications précédentes, **caractérisé en ce qu'**il consiste à ouvrir la soupape d'admission d'air suralimenté carburé (20) à la fermeture des soupapes d'échappement (36).

5. Procédé selon l'une quelconque des revendications précédentes, **caractérisé en ce qu'**il consiste à maintenir le moyen d'obturation additionnelle (30) en position d'ouverture tant que la pression d'air suralimenté non carburé est supérieure à la pression des gaz d'échappement

6. Procédé selon l'une quelconque des revendications 1 à 4, **caractérisé en ce qu'**il consiste à maintenir le moyen d'obturation additionnelle (30) en position de fermeture tant que la pression d'air suralimenté non carburé est inférieure à la pression des gaz d'échappement.

7. Moteur à combustion interne suralimenté, notamment moteur à injection indirecte, comprenant au moins un cylindre (10) comportant une chambre de combustion (14), un moyen d'admission d'air suralimenté carburé (16) avec un moyen d'obturation (20), un moyen d'admission d'air suralimenté non carburé (24) avec un moyen d'obturation (28) et au moins un moyen d'échappement de gaz brûlés (34), **caractérisé en ce qu'**il comprend un moyen d'obturation additionnelle (30) du moyen d'admission d'air suralimenté non carburé (24) à deux positions, une position de pleine ouverture ou une position de pleine fermeture dudit moyen d'admission d'air suralimenté non carburé.

8. Moteur selon la revendication 7, **caractérisé en ce que** le moyen d'obturation additionnelle comprend un volet articulé (30).

9. Moteur selon la revendication 7, **caractérisé en ce que** le moyen d'obturation additionnelle comprend un boisseau.

10. Moteur selon l'une des revendications 7 à 9, **caractérisé en ce que** le moyen d'obturation additionnelle (30) est contrôlé par des moyens de commande (32).

11. Moteur selon la revendication 10, **caractérisé en ce que** les moyens de commandes comprennent des moyens d'évaluation des pressions à l'admission et à l'échappement du moteur.

12. Moteur selon l'une des revendications 7 à 10, **caractérisé en ce que** le moyen d'obturation (28) est commandé par un arbre à cames dépourvu de déphaseur.

## Patentansprüche

1. Verfahren zum Steuern eines aufgeladenen Motors, insbesondere eines Motors mit indirekter Einspritzung, der mindestens einen Zylinder (10) aufweist, der eine Verbrennungskammer (14), mindestens ein Mittel zum Einlassen aufgeladener treibstoffhaltiger Luft (16) mit einem Einlassventil für aufgeladene treibstoffhaltige Luft (20), ein Mittel zum Einlassen aufgeladener nicht treibstoffhaltiger Luft (24) mit einem Einlassventil für nicht treibstoffhaltige Luft (28) und mindestens ein Mittel zum Auslassen verbrannter Gase (34) mit einem Auslassventil (36) aufweist, **dadurch gekennzeichnet, dass** es aus Folgendem besteht:
- Durchführen eines Überlappens der Ventile durch Öffnen des Einlassventils (28) und durch Öffnen des Auslassventils (36), vor dem Ende der Auslassphase eines Zylinders des Motors und in der Nähe des oberen Totpunkts (PMH),
- Steuern eines zusätzlichen Verschlussmittels (30) des Einlassmittels aufgeladener nicht treibstoffhaltiger Luft (24) derart, dass diese aufgeladene Luft in die Kammer (14) eingelassen wird, um ein Ausspülen der verbrannten Restgase auszuführen, wenn der Druck der aufgeladenen nicht treibstoffhaltigen Luft größer ist als der Druck der Abgase,
- Steuern des zusätzlichen Verschlussmittels derart, dass das Einlassmittel aufgeladener nicht treibstoffhaltiger Luft (24) geschlossen wird, wenn der Druck der aufgeladenen nicht treibstoffhaltigen Luft niedriger ist als der Druck der Abgase.

2. Verfahren nach Anspruch 1, **dadurch gekennzeichnet, dass** es darin besteht, das Einlassventil nicht treibstoffhaltiger Luft (28) mindestens während des gesamten Ausspülvorgangs in offener Position zu halten.

3. Verfahren nach Anspruch 1 oder 2, **dadurch gekennzeichnet, dass** es darin besteht, das Einlassventil nicht treibstoffhaltiger Luft (28) an dem Ende der Einlassphase des Motors zu schließen.

4. Verfahren nach einem der vorhergehenden Ansprüche, **dadurch gekennzeichnet, dass** es darin besteht, das Einlassventil aufgeladener treibstoffhaltiger Luft (20) beim Schließen der Auslassventile (36) zu öffnen.

5. Verfahren nach einem der vorhergehenden Ansprüche, **dadurch gekennzeichnet, dass** es darin besteht, das zusätzliche Verschlussmittel (30) solange in Öffnungsposition zu halten, wie der Druck der aufgeladenen nicht treibstoffhaltigen Luft höher ist als der Druck der Abgase.

6. Verfahren nach einem der Ansprüche 1 bis 4, **dadurch gekennzeichnet, dass** es darin besteht, das zusätzliche Verschlussmittel (30) solange in Verschlussposition zu halten, wie der Druck der aufgeladenen nicht treibstoffhaltigen Luft niedriger ist als der Druck der Abgase.

7. Aufgeladener Verbrennungsmotor, insbesondere Motor mit indirekter Einspritzung, der mindestens einen Zylinder (10) aufweist, der eine Verbrennungskammer (14), ein Einlassmittel aufgeladener treibstoffhaltiger Luft (16) mit einem Verschlussmittel (20), ein Einlassmittel aufgeladener nicht treibstoffhaltiger Luft (24) mit einem Verschlussmittel (28) und mindestens ein Auslassmittel verbrannter Gase (34) aufweist, **dadurch gekennzeichnet, dass** er ein zusätzliches Verschlussmittel (30) des Einlassmittels aufgeladener nicht treibstoffhaltiger Luft (24) mit zwei Positionen, einer vollen Öffnungsposition und einer vollen Verschlussposition des Einlassmittels aufgeladener nicht treibstoffhaltiger Luft aufweist.

8. Motor nach Anspruch 7, **dadurch gekennzeichnet, dass** das zusätzliche Verschlussmittel ein Klappventil (30) aufweist.

9. Motor nach Anspruch 7, **dadurch gekennzeichnet, dass** das zusätzliche Verschlussmittel einen Hahnkegel aufweist.

10. Motor nach einem der Ansprüche 7 bis 9, **dadurch gekennzeichnet, dass** das zusätzliche Verschlussmittel (30) von Steuermitteln (32) gesteuert wird.

11. Motor nach Anspruch 10, **dadurch gekennzeichnet, dass** die Steuermittel Mittel zur Bewertung der Drücke am Einlass und am Auslass des Motors aufweisen.

12. Motor nach einem der Ansprüche 7 bis 10, **dadurch gekennzeichnet, dass** das Verschlussmittel (28) von einer Nockenwelle ohne Phasenschieber gesteuert wird.

## Claims

1. A method of controlling a supercharged engine, notably an indirect-injection engine, comprising at least one cylinder (10) with a combustion chamber (14), at least one carbureted supercharged air intake means (16) with a carbureted supercharged air intake valve (20), a non-carbureted supercharged air intake means (24) with a non-carbureted supercharged air intake valve (28) and at least one burnt gas exhaust means (34) with an exhaust valve (36), **characterized in that** it consists in:
- achieving valve overlap, before the end of the exhaust phase of a cylinder of the engine and in the vicinity of the top dead center (TDC), through opening of intake valve (28) and opening of exhaust valve (36),
- controlling an additional sealing means (30) for closing non-carbureted supercharged air intake means (24) so as to allow this supercharged air into chamber (14) for scavenging the residual burnt gas when the non-carbureted supercharged air pressure is higher than the exhaust gas pressure,
- controlling said additional sealing means so as to close said non-carbureted supercharged air intake means (24) when the non-carbureted supercharged air pressure is lower than the exhaust gas pressure.

2. A method as claimed in claim 1, **characterized in that** it consists in maintaining non-carbureted air intake valve (28) in open position at least during the entire scavenging operation.

3. A method as claimed in claim 1 or 2, **characterized in that** it consists in closing non-carbureted air intake valve (28) at the end of the engine intake phase.

4. A method as claimed in any one of the previous claims, **characterized in that** it consists in opening carbureted supercharged air intake valve (20) upon closing of exhaust valves (36).

5. A method as claimed in any one of the previous claims, **characterized in that** it consists in maintaining additional sealing means (30) in open position as long as the non-carbureted supercharged air pressure is higher than the exhaust gas pressure.

6. A method as claimed in any one of claims 1 to 4, **characterized in that** it consists in maintaining additional sealing means (30) in closed position as long as the non-carbureted supercharged air pressure is lower than the exhaust gas pressure.

7. A supercharged internal-combustion engine, notably an indirect-injection engine, comprising at least one cylinder (10) with a combustion chamber (14), at least one carbureted supercharged air intake means (16) with a sealing means (20), a non-carbureted supercharged air intake means (24) with a sealing means (28) and at least one burnt gas exhaust means (34), **characterized in that** it comprises an additional sealing means (30) for closing non-carbureted supercharged air intake means (24) with two positions, a fully open position or a fully closed position of said non-carbureted supercharged air intake means.

8. An engine as claimed in claim 7, **characterized in that** the additional sealing means comprises a hinged clapper (30).

9. An engine as claimed in claim 7, **characterized in that** the additional sealing means comprises a throttle valve.

10. An engine as claimed in any one of claims 7 to 9, **characterized in that** additional sealing means (30) is controlled by control means (32).

11. An engine as claimed in claim 10, **characterized in that** the control means comprise engine intake and exhaust pressure evaluation means.

12. An engine as claimed in any one of claims 7 to 10, **characterized in that** sealing means (28) is controlled by an adjuster-free camshaft.
